Europäisches Patentamt

European Patent Office

Office européen des brevets

(11) Numéro de publication: **0 277 471 B1**

(12) **FASCICULE DE BREVET EUROPEEN**

(45) Date de publication de fascicule du brevet:
**18.09.91**

(51) Int. Cl.⁵: **H04L 27/26**, H04L 27/30

(21) Numéro de dépôt: **87870018.6**

(22) Date de dépôt: **05.02.87**

(54) Procédé de détection et de correction d'erreurs de transmission.

(43) Date de publication de la demande:
**10.08.88 Bulletin 88/32**

(45) Mention de la délivrance du brevet:
**18.09.91 Bulletin 91/38**

(84) Etats contractants désignés:
**AT BE CH DE ES FR GB GR IT LI LU NL SE**

(56) Documents cités:
**EP-A- 0 171 778**  **FR-A- 1 244 379**
**FR-A- 1 427 295**  **FR-A- 2 109 098**
**FR-A- 2 280 141**  **FR-A- 2 505 110**
**US-A- 3 593 279**

**PATENT ABSTRACTS OF JAPAN, vol. 7, no. 229 (E-203)[1374], 12 octobre 1983; & JP-A-58 117 757**

(73) Titulaire: **ALCATEL BELL-SDT S.A.**
**101 rue Chapelle Beaussart**
**B-6100 Charleroi(BE)**

(72) Inventeur: **Jacobs, Marc**
**Rue des Déportés, 31**
**B-6101 Jamioulx(BE)**
Inventeur: **Guillaume, Jean**
**13, Rue du Mayeuri**
**B-6100 Mont-Sur-Marchienne(BE)**

(74) Mandataire: **Van Malderen, Michel**
**p.a. Office van Malderen 85/043 Boulevard de la Sauvenière**
**B-4000 Liège(BE)**

## Description

La présente invention a pour objet un procédé de détection et de correction d'erreurs de transmission de signes, chiffres ou lettres, notamment de signes télégraphiques ou signes de téléimprimeur.

Il est déjà connu de représenter de tels signes dans un code à deux moments par deux fréquences, $f_J$ et $f_j$, $f_J$ étant une fréquence choisie dans un ensemble de m fréquences et étant émise pendant un premier moment; $f_j$ étant une fréquence choisie dans un ensemble de n fréquences et étant émise pendant un deuxième moment, généralement consécutif au premier moment. Um tel procédé de codage est connu par exemple de la demande FR-A-2 280 141.

L'invention a pour but un procédé de détection et de correction d'erreurs de transmission particulièrement performant. Dans ce but, il est déjà connu d'introduire des redondances sous forme de répétitions des signaux émis et de prévoir des détecteurs de coïncidence ou circuits votants à la réception. De tels procédés connus ralentissent la vitesse de transmission d'au moins un facteur 3 ou introduisent des complications dans le système émetteur-récepteur qui doit être prévu pour la transmission simultanée de trois messages. Le procédé suivant l'invention en est très différent et sensiblement plus performant.

Suivant un premier mode de mise en oeuvre, l'invention est caractérisée en ce qu'on transmet un signe de contrôle $f_Q,f_q$, simultanément ou en avance ou en retard par rapport à la transmission du signe original, ce signe de contrôle étant défini par une autre fréquence $f_Q$, choisie dans l'ensemble des m fréquences et une autre fréquence $f_q$, choisie dans l'ensemble des n fréquences; le numéro d'ordre Q de chaque fréquence d'un signe de contrôle étant une fonction des numéros d'ordre des fréquences des signes originaux J et j, Q étant exprimé modulo m et le numéro d'ordre q étant une autre fonction de J et j dont la valeur est exprimée modulo n; en ce qu'à la reception, on détermine les numéros d'ordre J, j, Q, q, et en ce qu'on contrôle, au moyen des relations établies entre J,j,Q,q, si tout est concordant, ou le cas échéant, en ce qu'on calcule au moyen de ces relations, la valeur correcte d'un numéro d'ordre d'une fréquence entâchée d'erreur reçue ou d'une fréquence non reçue.

Suivant un deuxième mode de mise en oeuvre, l'invention est caractérisée en ce que lors de la transmission de plusieurs signes originaux $f_A,f_a$; $f_B,f_b$,... on transmet plusieurs signes de contrôle $f_{A'},f_{a'}$; $f_{B'},f_{b'}$,...., simultanément ou en avance ou en retard par rapport à la transmission originale, ces signes de contrôle étant définis par d'autres fréquences $f_{A'},f_{B'}$..., choisies dans l'ensemble des m fréquences et d'autres fréquences $f_{a'},f_{b'}$,..., choisies dans l'ensemble des n fréquences, les numéros d'ordre A',B',.. étant une fonction des numéros d'ordre A,B,..., modulo m et les numéros d'ordre a',b',...., étant une fonction des numéros d'ordre a,b,..., modulo n, en ce qu'on détermine, à la réception, les numéros d'ordre A,B,A',B',a,b,a',b',...... des fréquences reçues et en ce qu'on contrôle, au moyen des relations établies entre A,B,...et A',B',... d'une part et a,b,...et a',b',... d'autre part, si tout est concordant ou, le cas échéant, en ce qu'on calcule, au moyen de ces relations, la valeur correcte d'un numéro d'ordre reçu entâché d'erreur ou non reçu.

L'invention est expliquée ci-dessous par rapport à deux exemples d'exécution.

Suivant un premier exemple, on utilise pour une transmission télégraphique un code à deux moments dans lequel chaque signe ou lettre est représenté par une fréquence $f_J$ prise dans un ensemble de 8 fréquences $f_1,f_2,f_3,f_4,f_5,f_6,f_7,f_8$, émise pendant un premier moment et par une fréquence $f_j$, prise dans un ensemble de quatre fréquences, en l'occurrence $f_5,f_6,f_7,f_8$, émise pendant le deuxième moment, faisant suite au dit premier moment. Les fréquences des deux ensembles peuvent être différentes ou non.

Dans le but d'engendrer une redondance qui permet de détecter et de corriger des erreurs de transmission, on transmet, outre le signal original suivant le code à deux moments ci-dessus, un autre signal, soit simultanément, soit en avance , soit en retard par rapport au signal original dont les fréquences $f_Q$ et $f_q$ ne sont pas identiques au signal original, mais sont choisies de telle manière que Q et q sont des fonctions de J et j. En particulier, on choisit les fonctions suivantes: $Q = J + j$ et $q = J - j$. Comme pour $f_Q$, le choix est limité à une fréquence dans un ensemble de 8 fréquences, Q est calculé "modulo 8", c'est-à-dire, si J + j dépasse le nombre 8, on choisit $Q = J + j - 8$ De même, on calcule q "modulo 4", c'est-à-dire, si J -j est inférieur à 4 ou négatif, on calcule $q = J - j + 4$ ou $q = J - j + 8$ de manière que q soit compris entre 5 et 8.

Lors de la réception on détecte les numéros d'ordre des fréquences reçues et on dispose ainsi de plusieures conditions pour vérifier si la transmission n'est pas entâchée d'erreurs. En l'occurrence, ces conditions sont: (1) Q + q est pair; (2) Q - q est pair; (3) $J + j = Q_{modulo\ 8}$ (4) $J - j = q_{modulo\ 4}$ (5) $Q + q = 2J (J_{modulo\ 4})$ (6) $Q - q = 2j (j_{modulo\ 4})$

Si, à la réception, toutes ces conditions sont réalisées, la transmission des deux signes s'est faite sans problèmes. Si Q + q ou Q - q est impair, la réception soit de Q, soit de q est entâchée d'erreur. De plus, si une fréquence, par exemple $f_J$ n'a pas été reçue, ce défaut est signalé par le dispositif de réception et il est alors possible , au moyen des relations ci-dessus, de retrouver le numéro d'ordre de la fréquence qui manque.

Comme dans la relation (5), le numéro d'ordre J est calculé modulo 4, alors que J originel peut être choisi parmi 8 fréquences avec des numéros d'ordre de 1 à 8, il est nécessaire de contrôler deux alternatives dont une seulement est la bonne. Une de ces alternatives $J_{modulo\ 4}$ et $J_{modulo\ 4} + 4$ doit satisfaire la relation (3). Si une de ces alternatives convient, la valeur de J est bonne.

Il est possible d'éviter de trancher au moyen de cette alternative. Pour ce faire, il est nécessaire d'utiliser un code à deux moments dans lequel pour chaque moment, on dispose d'une fréquence parmi les 8 fréquences Ceci doit être vrai au moins pour le signal de contrôle. Dans ce cas, toutes les conditions (1) à (6) ci-dessus peuvent être calculées "modulo 8".

Suivant un exemple conforme au deuxième mode de réalisation de l'invention, en lieu et place d'un contrôle signe par signe, une autre méthode est utilisée. Le contrôle peut alors se faire sur plusieurs signes, par exemple quatre signes ou lettres consécutives. Dans ce cas, ces quatre signes sont représentés par les fréquences $f_A, f_a$; $f_B, f_b$; $f_C, f_c$; $f_D, f_d$, les numéros d'ordre A,B,C,D, représentant chacun une fréquence choisie parmi les 8 fréquences $f_1$ à $f_8$ et les numéros d'ordre a,b,c,d, étant relatifs à des fréquences choisies parmi les quatre fréquences $f_5$ à $f_8$. Un ensemble de signes de contrôle peut alors être émis dont les relations avec les signes originaux sont par exemple les suivants: (7) A′ = A + B, (8) B′ = B + D , (9) C′ = C + A, (10) D′ = D + C, (11) E′ = A + D, (12) F′ = B + C, (13) A′ + D′ = C′ + B′ (14) a′ = a + b, (15) b′ = b + d, (16) c′ = c + a, (17) d′ = d + c (18) e′ = a + d, (19) f′ = b + c, (20) a′ + d′ = c′ + b′.

Si toutes les relations ci-dessus sont utilisées, il est nécessaire de transmettre 6 signes de contrôle. En général,il est suffisant de transmettre autant de signes de contrôle qu'il y a de signes originaux; dans le cas présent: quatre. Il est donc possible d'abandonner les relations (11), (12), (18), (19), ou pour le dire autrement, les signes de contrôle $f_{E'}, f_{e'}$; $f_{F'}, f_{f'}$. Les relations (7) à (13) concernent des valeurs "modulo 8". Les relations (14) à (20) concernent des valeurs "modulo 4".

Si 4 signes de contrôle sont émis pour 4 signes originaux, la vitesse de transmission est ralentie d'un facteur 2. Si au contraire on utilise 6 signes de contrôle pour quatre signes originaux, la vitesse de transmission est ralentie d'un facteur 2,5, ce qui est sensiblement inférieur au facteur 3 qui est à considérer pour de simples répétitions. Un autre avantage du procédé suivant l'invention est le fait qu'une erreur due à la présence d'un parasite égal à une fréquence de transmission n'affecte pas simultanément le signal original et le signal de contrôle, comme c'est le cas pour de simples répétitions

## Revendications

1. Procédé de détection et de correction d'erreurs de transmission de signes représentés dans un code à deux moments dans lequel, outre la transmission de signes originaux $f_J, f_j$, constitués d'une fréquence $f_J$, choisie dans un ensemble de m fréquences, émise pendant un premier moment et par une fréquence $f_j$, choisie dans un ensemble de m fréquences, émises pendant un deuxième moment, on transmet un signe de contrôle, simultanément ou en avance ou en retard par rapport au signe original, et différent dudit signe original

    caractérisé en ce que ce signe de contrôle $f_Q, f_q$, est défini par une autre fréquence $f_Q$, choisie dans l'ensemble des m fréquences et une autre fréquence $f_q$, choisie dans l'ensemble des n fréquences, le numéro d'ordre Q de chaque fréquence d'un signe de contrôle étant une fonction des numéros d'ordre des fréquences des signes originaux J et j, Q étant exprimé modulo m et le numéro d'ordre q étant une autre fonction de J et j dont la valeur est exprimée modulo n; en ce qu'à la réception, on détermine les numéros d'ordre J,j,Q,q, et en ce qu'on contrôle, au moyen des relations établies entre J,j,Q,q, si tout est concordant, ou, le cas échéant, en ce qu'on calcule, au moyen de ces relations, la valeur correcte d'un numéro d'ordre d'une fréquence entâchée d'erreur reçue ou d'une fréquence non reçue.

2. Procédé de détection et de correction d'erreurs de transmission de signes représentés dans un code à deux moments dans lequel, outre la transmission de signes originaux $f_A, f_a; f_B, f_b$; constitués de fréquences $f_A, f_B,$...choisies dans un ensemble de m fréquences, émises pendant des premiers moments et par des fréquences $f_a, f_b,$... choisies dans un ensemble de n fréquences, émises pendant des deuxième moments correspondants, on transmet des signes de contrôle, simultanément ou en avance ou en retard par rapport aux signes originaux, et difficents desdits signes originaux

    caractérisé en ce que ces signes de contrôle $f_{A'}, f_{a'}$; $f_{B'}, f_{b'}$;... sont définis par d'autres fréquences $f_{A'}, f_{B'},$... choisies dans l'ensemble des m fréquences et d'autres fréquences $f_{a'}, f_{b'},$...,choisies dans l'ensemble des n fréquences, les numéros d'ordre A′,B′, ... étant une fonction des numéros d'ordre A,B,..., modulo m et les numéros d'ordre a',b',..., étant une autre fonction des numéros d'ordre a,b,...,modulo n; en ce qu'on détermine, à la réception, les numéros d'ordre A,B ,..a,b,.., A',B',..,a',b',.. des fréquences reçues et en ce qu'on contrôle, au moyen des relations établies entre A,B,.. et A',B',... d'une part et a,b,... et a',b',.. d'autre part, si tout est concordant ou, le cas échéant, en ce qu'on calcule, au moyen de ces relations, la valeur correcte d'un numéro d'ordre reçu entaché d'erreur ou non reçu.

## Claims

1. Method of detecting and of correcting errors of transmission of characters appearing in a two-level code in which, in addition to the transmission of original characters $f_J, f_j$, which consist of a frequency $f_J$, chosen from a set of m frequencies and transmitted during a first time, and of a frequency $f_j$, chosen from a set of n frequencies, which are transmitted during a second time, a test character is transmitted simultaneously or ahead of or behind the original character,

   characterised in that this test character $f_Q$, $f_q$, is defined by another frequency $f_Q$, chosen from the set of the m frequencies, and another frequency $f_q$, chosen from the set of the n frequencies, the serial number Q of each frequency of a test character being a function of the serial numbers of the frequencies of the original characters J and j, Q being expressed modulo m and the serial number q being another function of J and J and of which the value is expressed modulo n; in that, on reception, the serial numbers J,j,Q,q are determined, and in that, by means of the relationships established between J,j,Q,q there is a test of whether all is concordant, or, if necessary, in that, by means of these relationships, the correct value is calculated of a serial number of a received erroneous frequency or of an unreceived frequency.

2. Method of detecting and of correcting errors of transmission of characters appearing in a two-level code in which, in addition to the transmission of original characters $f_A, f_a; f_B, f_b; ...$ consisting of frequencies $f_A, f_B, ...$ chosen from a set of m frequencies, which are transmitted during first times, and of frequencies $f_a, f_b, ...$ chosen from a set of n frequencies, which are transmitted during corresponding second times, test characters are transmitted simultaneously or ahead of or behind the original characters,

   characterised in that these test characters $f_{A'}, f_{a'}; f_{B'}, f_{b'}; ...$ are defined by other frequencies $f_{A'}, f_{B'}, ...$ chosen from the set of the m frequencies and other frequencies $f_{a'}, f_{b'}, ...$, chosen from the set of the n frequencies, the serial numbers A',B',... being a function of the serial numbers A,B,..., modulo m, and the serial numbers A',B',..., being another function of the serial numbers A,B,...,modulo n; in that, on reception, the serial numbers A,B,..a,b,..,A',B',...,a',b',.. of the received frequencies are determined, and in that, by means of the relationships established between A,B,.. and A',B',..., on the one hand, and a,b,... and a',b',.., on the other hand, there is a test of whether all is concordant or, if necessary, in that, by means of these relationships, the correct value is calculated of an erroneous received or unreceived serial number.

## Patentansprüche

1. Verfahren zum Nachweis und zur Korrektur von Übertragungsfehlern bei Zeichen, die in einem Code mit zwei Augenblicken dargestellt sind, wobei bei diesem Verfahren außer ursprünglichen Zeichen $f_J$, $f_j$ mit einer Frequenz $f_J$, die aus einer Gesamtheit von m Frequenzen ausgewählt wird und während eines ersten Augenblicks ausgesandt wird, und mit einer Frequenz $f_j$, die aus einer Gesamtheit von n Frequenzen ausgewählt wird und während eines zweiten Ausgenblicks ausgesandt wird, gleichzeitig oder früher oder später bezüglich des ursprünglichen Zeichens ein Kontrollzeichen übertragen wird,

   **dadurch gekennzeichnet, daß** dieses Kontrollzeichen $f_Q$, $f_q$ festgelegt wird durch eine weitere Frequenz $F_Q$, die aus der Gesamtheit der m Frequenzen ausgewählt wird, und durch eine weitere Frequenz $f_q$, die aus der Gesamtheit der n Frequenzen ausgewählt wird, wobei die laufende Nummer Q jeder Frequenz eines Kontrollzeichens eine Funktion der laufenden Nummern der Frequenzen der ursprünglichen Zeichen J und j ist, Q gemäß Modulo m ausgedrückt wird, und die laufende Nummer q eine weitere Funktion von J und j ist, deren Wert gemäß Modulo n ausgedrückt wird; **daß** beim Empfang die laufenden Nummern J, j, Q, q bestimmt werden, **und daß** mittels der zwischen J, j, Q, q aufgestellten Beziehungen kontrolliert wird, ob alles übereinstimmt, oder, falls erforderlich, mittels dieser Beziehungen der richtige Wert für eine laufende Nummer einer empfangenen falschen Frequenz, oder einer nicht empfangenen Frequenz berechnet wird.

2. Verfahren zum Nachweis und zur Korrektur von Übertragungsfehlern bei Zeichen, die in einem Code mit zwei Augenblicken dargestellt sind, wobei bei diesem Verfahren außer ursprünglichen Zeichen $f_A$, $f_a$; $f_B$, $f_b$; ... mit den Frequenzen $f_A$, $f_B$, ..., die aus einer Gesamtheit von m Frequenzen ausgewählt werden und während erster Augenblicke ausgesandt werden, und mit den Frequenzen $f_a$, $f_b$, ..., die aus einer Gesamtheit von n Frequenzen ausgewählt werden und während entsprechender zweiter Augenblicke ausgesandt werden, gleichzeitig oder früher oder später bezüglich der ursprünglichen Zeichen Kontrollzeichen übertragen werden,

**dadurch gekennzeichnet, daß** diese Kontrollzeichen $f_{A'}$, $f_{a'}$; $f_{B'}$, $f_{b'}$; ... festgelegt sind durch weitere Frequenzen $f_{A'}$, $f_{B'}$, ..., die aus der Gesamtheit der m Frequenzen ausgewählt werden, und durch weitere Frequenzen $f_{a'}$, $f_{b'}$, ..., die aus der Gesamtheit der n Frequenzen ausgewählt werden, wobei die laufenden Nummern A', B', ... eine Funktion der laufenden Nummern A, B, ... gemäß Modulo m, und die laufenden Nummern a', b', ... eine weitere Funktion der laufenden Nummern a, b, ... gemäß Modulo n sind; **daß** beim Empfang die laufenden Nummern A, B, ..., a, b, ..., A', B', ..., a', b', ... der empfangenen Frequenzen bestimmt werden, **und daß** mittels der einerseits zwischen A, B, ... und A', B', ..., und andererseits zwischen a, b, ... und a', b', ... aufgestellten Beziehungen kontrolliert wird, ob alles übereinstimmt, oder, falls erforderlich, mittels dieser Beziehungen der richtige Wert für eine empfangene falsche laufende Nummer, oder eine nicht empfangene laufende Nummer berechnet wird.